(19) Europäisches Patentamt
European Patent Office
Office européen des brevets

(11) **EP 2 050 955 A2**

(12) **EUROPEAN PATENT APPLICATION**

(43) Date of publication:
**22.04.2009 Bulletin 2009/17**

(51) Int Cl.:
*F03G 7/00* *(2006.01)*

(21) Application number: **08398010.2**

(22) Date of filing: **11.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.07.2007 PT 10378707**

(71) Applicant: **Fernandes Tavares, Miguel Augusto 2085-063 Almada (PT)**

(72) Inventor: **Fernandes Tavares, Miguel Augusto 2085-063 Almada (PT)**

(54) **Nano-centrifugal propulsion**

(57) Mechanical device and its variants, able to function in vacuum and cosmic space, whose organs, by their simple construction, have dimensions preferably micro or nanometric, and associated in great numbers, by their geometry and driving mode, extract from the movement of the masses in vibration or when grouped in pairs in counter-rotation, E:F and G:H, a force of propulsive or lifting nature, LE+LF, of high intensity, far superior to the weight of the device and enough to originate the translation of the device and to have industrial applications, at a low cost.

It has generic practical applications, such as propulsion aid, for example in assisting take-off of air planes. The most interesting one is the propulsion of space crafts, not requiring the use of fuels, when driven for example by solar photovoltaic energy. Incorporated in an automatic device, they can avoid falls of workers from scaffolding or at least reduce the consequences of said falls.

DES. 5

EP 2 050 955 A2

**Description**

1.1 Technical field

Mechanical device, and its variants, preferably comprising nano or micro dimension elements, permitting to obtain, from the vibration or eccentric rotation of pairs of masses, a force of the propulsive or lifting kinds (i.e. linear, unidirectional, with only one sense , orientable, controllable and capable of originating translation of the device), with enough intensity for industrial application (far superior to the weight of the device).

The described devices, "nano centrifugal propulsion" aim, at low cost, enable the use of the propperties of the centrifugal force, functioning in certain conditions, in which this force can be very intense; thereby producing a translation force without resourcing to any support exterior to the device, nor to ejection of material, being able to function in vacuum and cosmic space.

This result is achieved by eliminating or cancelling the transversal components of the forces originated by the rotation of the eccentric pair of masses, while at the same time reinforcing the positive sense of the longitudinal components of these forces, while reducing or cancelling their negative sense. This is furthermore achieved only by means of the particular geometric construction of the device, and the way of driving the eccentric masses, and when these active organs are driven by other form of energy, such as photovoltaic, one can dispense the use of fuel and other propellants, thereby having great advantages in space propulsion applications.

The described effects can be obtained by means of 4 embodiments, from a) to d), some of them being able to inter combine. All of them are of simple construction, allowing their miniaturization and functioning at very high speed. However, they can also be manufactured at macro scale. The calculations for the dimensioning of the active organs, or eccentric masses, of embodiment b) are presented in Annex, because this is easiest case.

But the conclusions are valid for all embodiments. That are: at nano dimensions, the best results are achieved: producing a force of same intensity with a greater number of devices but lower total weight, or requiring less global driving power, inherently offsetting the inconvenients of greater complexity. Or, a bigger force... This final result is not self evident, and only with the current advances in micro and nano technology, the fabrication of devices comprising a great number of active organs appears as acceptable in terms of weight, required driving power, and cost.

Embodiments and their variations are described which are appropriate for miniaturization, because it is not possible to foresee which one is the best for each field of application. All drawings are schematics, not showing the details of the driving nor the mounting structures of the active organs.

1.2 State of the art

There are plenty of patents with this aim of producing an unidirectional force from centrifugal force: however, all of them seem conceived to be constructed at macro scale, being inappropriate to miniaturization or use of very high speeds, at the micro or nano dimension.

In fact, only this technology allows, at a low cost to achieve the above mentioned goals making in this way making viable the production of a high intensity translation force.

The following advantages are achieved with all the embodiments described: direction and sense of the resulting force depends solely of the spacial orientation of the device; not using ejection of material to produce a propulsive or lift force, sparing on propellants and fuel; producing this said force without support in other object or fluid, the devices are able to work in vacuum or cosmic space.

1.3 Embodiment a)

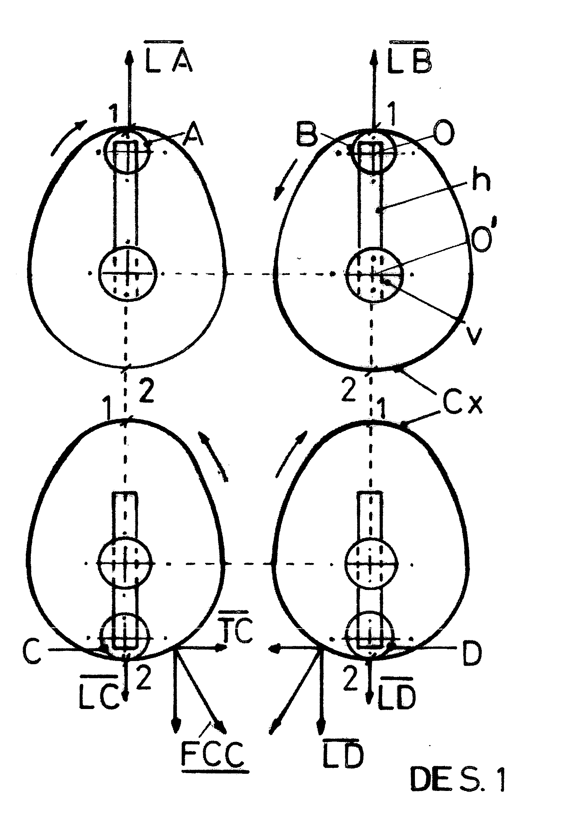

Refering now to figure 1, embodiment a) is constituted of the association of a great number of the basic components, each of them consists of two conjugated eccentric masses A and B, i.e. identical, synchronised, counter rotating, in parallel axis , with constant angular velocity, describing oval orbits and with adequate geometric disposition and phase (out of phase by 180 degrees).

<u>NOTE</u> : Figure = Des.

1.4 Embodiment a.1)

One of the possible constructions (see fig. 1): the eccentric masses A and B are cylinders rolling over the inner wall of an oval shaped guiding box Cx , driven by arms h, along which they can slide. In a preferred embodiment the arm h will have a tubular zone, inside which another part of the arm h will be able to slide, or, alternatively, the arm h slides through a radial hole in the axle V. This figure schematizes the way of working and shows that in all points of the orbit of the masses A and B the transversal components of the centrifugal force the vectors TA and TB cancel each other, while the longitudinal components LA and LB are added, originating the translation of the device.

In this drawing 1, Cx is the guiding box, and the eccentric masses A and B are seen from one of the extremities of the axles in a way that being these axles vertical, the resulting force LA + LB is horizontal.

The positive force is bigger at point 1 of figure 1 because this is the part of the orbit with smallest curvature and also of highest peripheral speed (the centre of gravity of the eccentric masses is further away from the axle of rotation O'), while at point 2 it is negative and smaller than the force at point 1. The axle of rolling of each eccentric mass is O. This drawing also shows the forces at a generic point, showing that the transversal components are mutually cancelled.

By calculations, if the guiding box is a simple circular tube off centre with respect to the axle of rotation of the eccentric masses by 10% of its radius, we'll obtain a relation of $F1/F2 = 1.222$.

### 1.5 Embodiment a.2)

This embodiment makes it possible to use nano eccentric masses sliding supported by a bracket, like a monorail, and containing themselves motors (nano motors) and a gear which engages with the wall of the guiding box, which is provided with internal gear teeth. This embodiment a.2 doesn't need the arms, the axle, etc. This construction, not represented in the figures, may have interest, although the eccentric masses are more complex, it is believed that it is possible to fabricate it, with current nano technology.

### 1.6 Embodiment a.3)

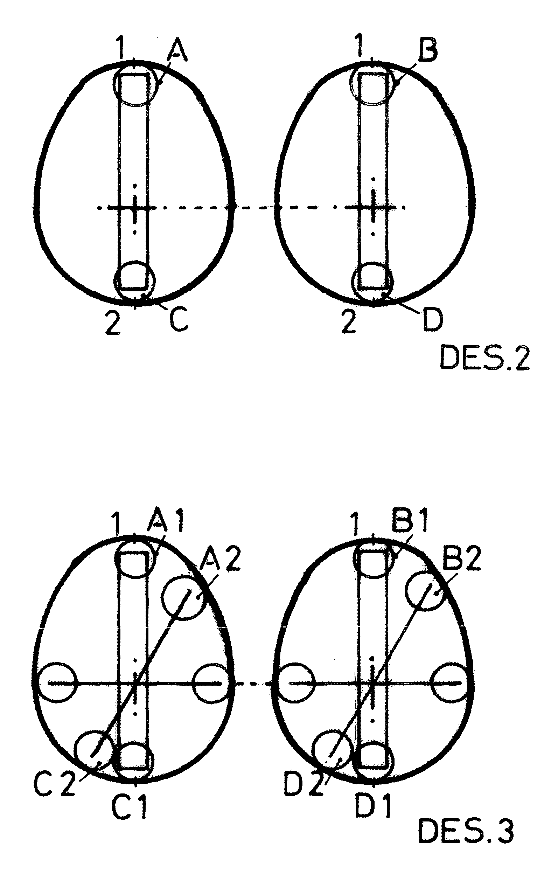

A slight modification of embodiment a.1 consisting in allowing the arm, having an eccentric mass at each end, to slide radially across the driving axle figure 2, making possible to get a pulsating propulsive force, always positive from a single pair of two symmetrical eccentrics instead of a minimal of two conjugated pairs, as in embodiment b) for instance. With the disadvantage of lessening the intensity of the resulting force, which is F1-F2 instead of 1.222xF2, in this way we can produce a force always positive, from only two symmetrical eccentrics rotating around a centre not coinciding with the centre of gravity of the arm. In this embodiment, above, we obtain $F1-F2 = 0.222 \times F2$.

### 1.7 Embodiment a.4)

But type a.3 makes clear that this embodiment makes way to the addition of other arms with symmetrical eccentrics, at regular angular intervals distributed along the driving axle as can be seen in figure 3.

And these intervals can be of only a few degrees, i.e.: if there is a continuous flux of eccentric masses describing this orbit, the device will produce a force with little ripple, adding off sinusoids with maximum value of 0.222 x F2, the result depending on the number of sinusoids.

The set of rolling masses, arms, axles, bearings, gears and control electronics can therefore be replaced by a liquid or flow of spheres inside a pipe , driven, for example, by air pressure, with the foreseen limitation of not being able to achieve high linear velocities.

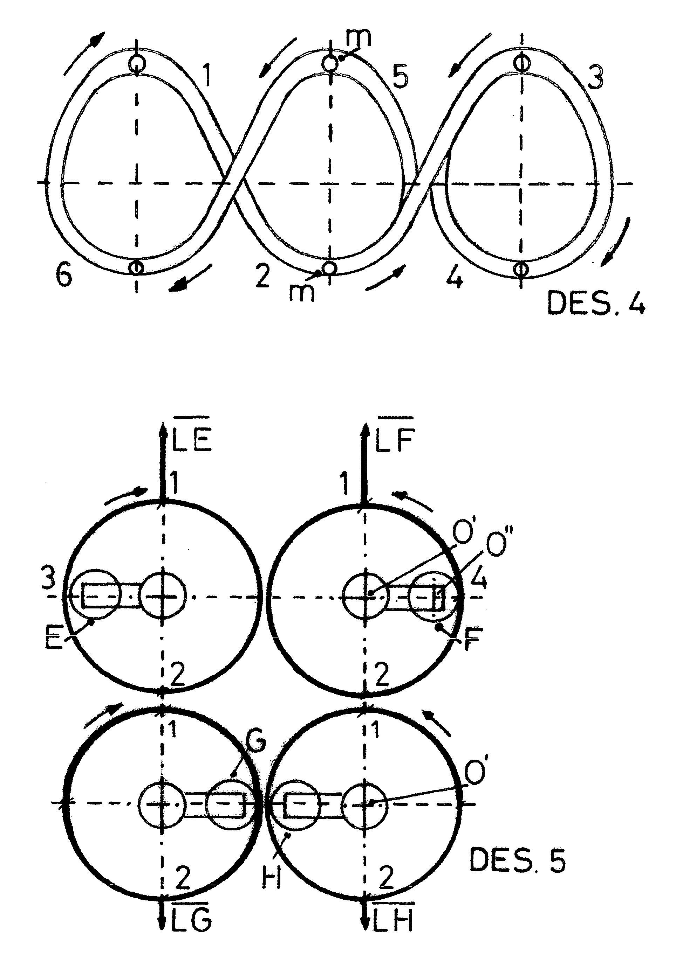

But, if now the zone of bigger radius is open in the middle and the points are twisted by 90 degrees, it is possible to connect several devices, as many as desired, as long as there is a way of return for the eccentric masses, which work in closed cycle, this being achieved by the construction seen in figure 4. Following the reference numbers in this drawing we are able to follow the path of the active organs, except from 4 to 5 which is not shown.

Appearing less interesting, it opens the possibility of using at a moderate speed, he same principle employed by the "railgun". At first sight this will simplify the construction, the eccentric masses may slide at the two guide rails without the need to rotate on the support surface.

Not shown, there is also the possibility of next to this propulsive pipe, staggering others such devices, such as to occupy the most of the available surface.

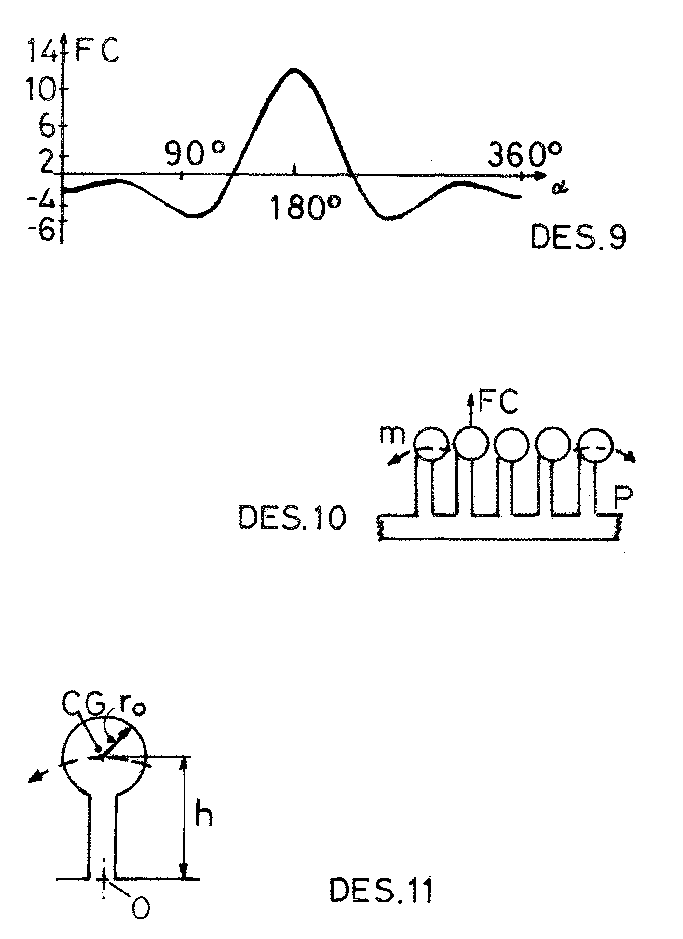

The remaining analysis of the dimensioning of the eccentric masses is done for embodiment b), since in this case it is easier and clearer. It is presented in the annex and it refers to figure 11.

### 1.8 Embodiment b)

In this embodiment a pair of conjugated eccentric masses E and F, as in embodiment a.1), with similar organs, but describing circular orbits with variable speed according with the position of the eccentric masses at the orbit, figure 5. In this figure, the eccentric masses are at the points of their orbits in which the longitudinal force is zero.

With appropriate construction the eccentric masses can also rotate supported by a circular guiding box , with the sole function of supporting higher forces.

1.9 Embodiment b.1)

In this device b) and referring to figure 5, the reinforcement of positive sense of the longitudinal components of the resulting centrifugal force FC, the vector LE + LF and the reduction of the negative sense of the resulting force -LE-LF is accomplished by varying the speed of rotation of the eccentric masses such as to obtain higher centrifugal force at the places where the speed is higher. This can be done by mechanical means such as eccentric gears or using step motors or any of the possible motors at nano scale, for example, piezo-electric comb, being that the synchronisation and the speed variation is done electronically, doing away with part of the mechanical pieces.

In the case of off centre eccentric gears by 20% of their radius, the speed relation between the points 1 and 2 of figure 5, would be, n1/n2 = 2.25 and since the centrifugal force is directly proportional to the square of the speed, the relation between the centrifugal forces would then be:

$$F1/F2 = 2.25 \times 2.25 = 5.06$$

This amount of the gears eccentricity enables us to get an always positive pulsating force with an intensity of 4.06 x F2, when associated with another similar pair of eccentric masses G and H, synchronised and out of phase with E and F by 180 degrees, and aligned in the longitudinal direction by the slashed line uniting the axles as indicated in figure 5.

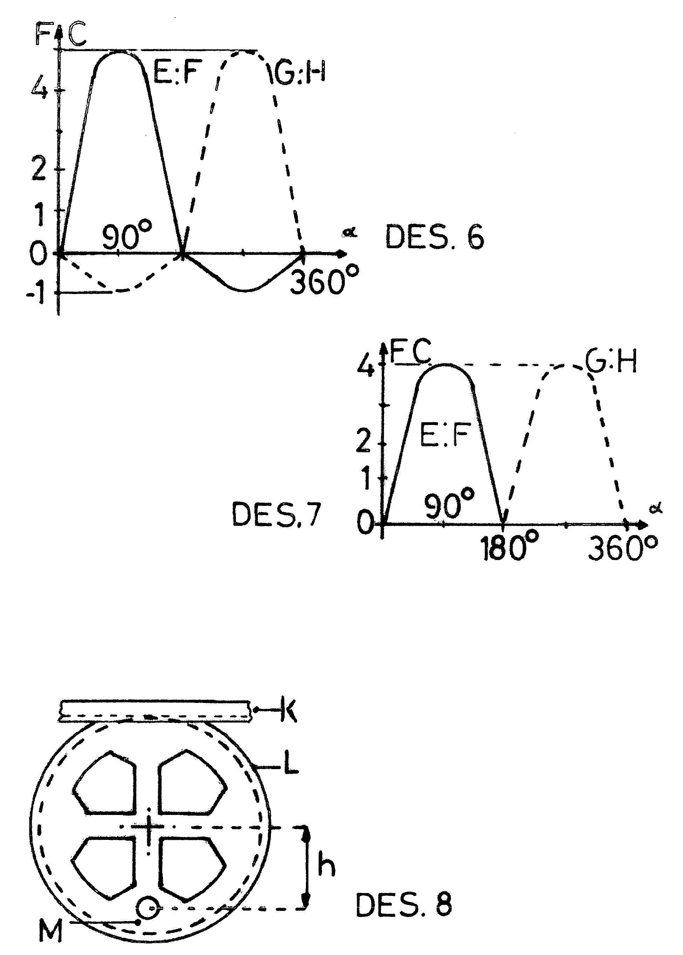

If the rotation was done at constant speed, the result would be a sinusoidal force with the intensity FC; since the speed is variable the result is a relation between the positive and negative senses in a sinusoidal form with a maximum of 5.06 x FC at the 90 degrees, with a minimum of -FC at the 270 degrees. Figure 6 shows the force produced by the pair E and F and the slashed line shows the force produced at the pair G and H. At this figure the abscissa shows the angle of rotation of the eccentric masses, starting at points 3 and 4 of figure 5, to which correspond the 0 degrees of figure 6. The points 1 of figure 5 are still the points where the force is maximal.

We note that these curves are certainly sinusoidal in both positive and negative zones, although this might not look like due to the change in aspect, caused by different amplitudes in each zone. The final result of this association is obtained by summing both curves point by point, see figure 7.

We show an eccentric mass of micrometric dimensions explained at paragraph 1.13 "Conclusions and practical realisation" and referring to figure 8.

1.10 Embodiment b.2)

In this embodiment the guide box is a nanotube, proportionally much more resistant.

1.11 Embodiment c)

In this embodiment the eccentric masses A and B of embodiment a) or E and F of embodiment b), both rotating at constant speed Wo, are associated with other pairs of eccentric masses synchronised, rotating at harmonic speed (2Wo, 3Wo, etc) and dimensioned in such way in phase and intensity to enable us to get a Fourier synthesis, achieving a positive resultant force, with triangular or similar shape. In this way the negative part of the longitudinal component of the centrifugal force is reduced.

They can also rotate supported by a circular guiding box, as in embodiments a) and b).

Analysing the results of the sum point to point of these sinusoids, for one of the most interesting cases, corresponding to the expression:

$$F = 4,5\sin(Wo - pi/2) + 5\sin(2Wo + pi/2) + 3\sin(3Wo + 3pi/2)$$

The result is a positive maximum bigger than 12 during 100 degrees and a negative zone with an average of -3 (minus 3) during 260 degrees, figure 9.

Although the use of this embodiment alone seems to have advantage only in the cases where the device c) and the structure in which it is mounted, for example a vehicle, is able to get some speed and store enough kinetic energy to override the negative force zone, similarly to a inertial wheel of an internal combustion engine, it is noteworthy that this embodiment can be associated with others improving their performance. It has the advantage of producing a force without accelerations and decelerations, reducing material fatigue which is important at high speed.

Besides the above expression still remains the possibility of adding other harmonics with other phases, amplitude and frequencies.

1.12 Embodiment d)

In this embodiment the rotation of the eccentric masses is replaced by their vibration: the device is formed by a great number of microscopic masses (m) in the free end of similarly sized blades, fixed at the other end, and vibrating at their ressonance frequency such as to cover a small circular arch, similarly to a mechanical frequency meter.

In figure 10 it is represented part of a row, wherein P is the substrate or a plate where the blades are fixed, and where the driving electronics (nanomotors) and control electronics are also fixed.

The transversal components of the centrifugal force are negligible at the zone of the trajectory which is used, and therefore it might not be necessary to synchronise the phase of the vibration movement of the masses. The force developed by each unit is very small, but at the nanoscale, and with very high frequencies, short radius, and each device containing millions of blades by cm2, its intensity will be useful. A further advantage is that this device is much simpler than the devices previously described: it does not appear to require synchronisation, and avoids problems related to friction, however, with synchronisation better results are achieved. The vibration can be achieved by means of piezo-electric components, but any other method of inducing vibration of the blades is valid.

1.13 Conclusion and practical realisation

In face of the results indicated in the table in the Annex, which is also shown here, it can be seen that lighter and faster eccentric masses in great numbers, allow to reduce the weight or the total power necessary to produce the same force. Besides that, nanotechnology does away with the use of electromagnetic motors, which are comparatively heavier and more expensive.

| Eccentric type / weight [Kg] | R [m] | h [m] | n [rpm] | F/ eccentric mass | N | E power [W] | Total power N.E. [W] | Total weight [Kg] |
|---|---|---|---|---|---|---|---|---|
| o/l | $0{,}1 \cdot Ro$ | $0{,}1 \cdot ho$ | 600 | $40 \cdot Fo$ | 1 | 37,66 | 37,66 | 1 |
| 1/0,01 | 0,01 | 0,01 | 600 | 0, 04 | $10^3$ | $10^{-5} \cdot Eo$ | $10^{-2} \cdot Eo$ | 10 |
| $2/10^{-6} \cdot po$ | $10^{-3} \cdot Ro$ | $10^{-3} \cdot ho$ | 6000 | $10^{-7} \cdot Fo$ | $10^7$ | $10^{-12} \cdot Eo$ | $10^{-5} \cdot Eo$ | 10 |
| $3/10^{-8} \cdot po$ | $10^{-4} \cdot Ro$ | $10^{-4} \, ho$ | 6000 | $10^{-10} \cdot Fo$ | $10^{10}$ | $10^{-17} \cdot Eo$ | $10^{-7} \cdot Eo$ | 100 |

This table is based on the calculations at the Annex, which refer to one single eccentric mass, and are supported by figure 11 which shows the dimensions of a model of eccentric mass which makes the reasoning easier.

It is possible to choose the best dimensioning according to the application of the device. For example, if we use ten sets of eccentric masses of the type of the embodiment 2, these will have a total of 2x10 to the power of 8 eccentric masses, with a total weight of 200 Kg, consuming 37,66x10 to the power of -4 Watt, but will exert a total sinusoidal force of 800Kg peak, and in each second there will be 6000/60 = 100 peaks of 800Kg of force.

It is to be noted that the table is made for one sole eccentric mass, but in the above example 100.000.000 pairs would be required.The eccentric of the type of embodiment 3 would have 100 microns of radius, which is in the range of micro machines existing in laboratories today (diameters of 50 to 250 microns) and that can rotate at nearly one million rpm. There is a penalty in that there are friction problems and great wear with short duration and in the current case, the limit of the resistance of the materials would be reached before, therefore n3 = 6000rpm was maintained. These obstacles are being solved by researchers, and meanwhile it is believed that it will be practical to achieve 60000rpm if necessary.

At these dimensions and speeds, each eccentric mass will have minimal mass and very simple construction, being materialised by a notch in the body of the gear, a low depth hole, whose diameter defines R and the distance defines h - the eccentric mass is in fact in the diametrically opposed position - see figure 8. If convenient or necessary, this hole can receive a micro cylinder of some other denser material, for instance copper, in which case the most adequate format for the notch would be something similar to a half moon, so that the substrate can better fit at high mechanical tension.

These results indicate that nanotechnology can be very interesting to obtain devices with lower weight or lower energy consumption, even if at the cost of higher complexity, the later being naturally resolved by the technology of fabrication, which allows to integrate in the same plate the control devices and control electronics and the driving of many thousands of gears, keeping low the total cost of the set, or nano or micro electro-mechanical systems or NEMS or MEMS.

If built at the macro scale it is possible to apple to the nano-centrifugal propulsion devices herein described, the technology developed for inertial wheels for storage of energy, devices which, when rotating in vacuum and in special bearings, are made of synthectical materials which in case of failure do not shred, and have bigger resistance to traction with lower density, making it possible to reach higher levels of speed, such as nylon, kevlar or carbon fibres.

2.11 List of drawings

Figure 1 - embodiment a) of the type a.1, pair of eccentric masses in oval orbit.

Figure 2 - embodiment a) of the type a.3, with radially sliding rod and symmetrical eccentric masses.

Figure 3 - embodiment a) of the type a.4, with several sliding rods with eccentric masses a regular angular intervals.

Figure 4 - embodiment a) serial interconnection of several devices.

Figure 5 - two views of two pairs of conjugated eccentric masses E:F and G:H in circular orbit, embodiment b)

Figure 6 - graphic of the force, an altered sinusoidal, of each pair, E:F in full and G:H in circular orbit, embodiment b)

Figure 7 - graphic of the resultant, sum of E:F with G:H, embodiment b)

Figure 8 - eccentric masses of nanometric dimensions, embodiment b)

Figure 9 - Result of the Fourier syntheses, embodiment c)

Figure 10 - Vibrating nanometric blades, embodiment d)

Figure 11 - Comparison of the effect of the eccentric masses dimensions, embodiment d)

**Claims**

1. Nano centrifugal propulsion, mechanical device, and its variants, having organs preferencialy of micro or nano dimensions, like MEMS, able to obtain a force with great intensity, limited only by the mechanical strength of the materials and of propulsive or lifting kind, that is, linear, having only one direction and one sense, capable of being oriented and contoled, resulting on the translation of the device, **characterized by** the association of a large number of of masses mechanicaly vibrating or combined in conjugated pairs of masses, counter-rotating off-center and describing orbits of small radius, at high speed, and having a geometric disposition and means of being driven such that the centrifuge force's transversal components are canceled or anulated at the same time the positive sense of the longitudinal components of said force being reinforced, while their negative sense is reduced or nullified.

2. Nano centrifugal propulsion, mechanical devices according with 1st claim, **characterized by** having a simple construction, wich enables them to be fabricated with micro or nano technology, when convenient, that is: in big numbers, rotating at high speed with a small radius of giration and at low cost.

3. Nano centrifugal propulsion, mechanical devices according with before said claims, **characterized by** some variants or embodiments having rotative organs being able to reach very high speed because these organs, the eccentric masses, are supported by a guiding box, so producing a larger force.

4. Nano centrifugal propulsion, mechanical devices according with before said claims, embodiment a), type a.1, **characterized by** the association of a big number of basic devices, each one comprising one or two pairs of masses rotating off center and following an oval orbit with constant angular speed, counter-rotating at the same plane and with parallel axles, by their geometric disposition and way of driving canceling the tranversal components of the centrifuge force of each other, while reinforcing the positive part of the longitudinal components of said force at the same time that their negative part is reduced or nullifyed, due to the bigger centrifuge force where the speed is bigger and permiting to install at the same driving arm other pair of eccentric masses, C:D, identical to A:B but 180 degrees out of fase, forming a simmetrical set, and producing an always positive resultant force.

5.  Nano centrifugal propulsion, mechanical devices according with previous claims, embodiment a), type a.2, **characterized by** having the eccentric masses mounted on a clip, and containing its driving nanomotor, control system and a gear, enabling it to ride against the guiding box, wich is provide with internal gear teeth, and so eliminating the need of the driving arm and central axle on the type a).1.

6.  Nano centrifugal propulsion, mechanical devices according with previous claims, embodiment a), type a.3, **characterized by** having the eccentric masses mounted in a simmetrical way on the driving rod or arm, that is, one at each extreme.

7.  Nano centrifugal propulsion, mechanical devices according with previous claims, embodiment a), type a.4, **characterized by** the association of a big number of simmetric sets of pairs A:B and C:D, at regular angular spaces, so small as we want, permiting us to turn way of the initial construction, changing it to a single pipe or rail, with an adequate waving, the active organs sliding in it and permiting their return to the initial departure point, runing in a closed loop.

8.  Nano centrifugal propulsion, mechanical devices according with before stated claims, namely 4th and 7th , **characterized by** having their active organs drived in a way similar to the electrmagnetic guns or "railguns".

9.  Nano centrifugal propulsion, mechanical devices according with claims, 1st. and 4th, variant b), kind b.1, but drived in circular orbits with variable angular speed, by mechanical or electronic means, in accordance with the position of the masses on the orbit, and having associated with the first pair E:F another similar pair G:H, out of fase 180 degrees.

10. Nano centrifugal propulsion, mechanical devices according with claims, 1st. to 9th, variant b), kind b.2, **characterized by** their guiding box being a nanotube.

11. Nano centrifugal propulsion, mechanical devices according with claims, 1st. to 9th, variant c), **characterized by** the association of agreat number of devices, variant a) or b), assembled according their respective constant angular speed having harmonic speeds, and with fase and amplitude chosen in such a way to obtain a kind of Fourier synthesis, reinforcing the positive sense while reducing the negative sense of the longitudinal components of the resulting force.

12. Nano centrifugal propulsion, mechanical devices according with before said claims, variant d), **characterized by** having the rotation fo the active organs replaced by an oscillation or vibration, at their ressonace frequency, very high due to their nanoscopic scale and being made as a big number of masses mounted on the free extreme of a elastic blade.

13. Nano centrifugal propulsion, mechanical devices according with before said claims, variant d), **characterized by** the combination of 2 or more variants wich have been described.

DE S. 1

DES.2

DES.3

DES. 4

DES. 5

DES. 6

DES. 7

DES. 8

DES.9

DES.10

DES.11